# EUROPEAN PATENT APPLICATION

(11) **EP 4 629 417 A1**
(43) Date of publication of application: **08.10.2025**
(21) Application number: 25161508.4
(22) Date of filing: 04.03.2025
(51) Int. Cl.: H01M 50/211, H01M 50/271, H01M 50/289, H01M 50/308, H01M 50/367

(54) **BATTERY PACK**

(30) Priority: 01.04.2024 CN 202420657098 U
(71) Applicant: AESC Japan Ltd., Yokohama-Shi, Kanagawa 220-0012 (JP)
(72) Inventor: WU, Changjun, Pudong New Area Shanghai, 201315 (CN); CHEN, Zhuolie, Pudong New Area Shanghai, 201315 (CN); CUI, Xin, Pudong New Area Shanghai, 201315 (CN); HE, Yafei, Pudong New Area Shanghai, 201315 (CN)
(74) Representative: Becker, Eberhard

(57) **Abstract**

A battery pack includes a lower housing (1), a cell stack body (2), a foaming adhesive (3), a cover (4), and a partition structure (5). The lower housing has an upper opening and an exhaust portion (121). The cell stack body includes multiple stacked pouch cells (21), and is disposed in the lower housing, with the bottom side of the cell stack body connected and fixed to the baseplate (11) of the lower housing. The foaming adhesive is filled and connected between the tab side of the cell stack body and the lower housing. The cover is located on the top side of the cell stack body and covers the upper opening of the lower housing. The partition structure is clamped between the cover and the cell stack body.

## Description

### BACKGROUND

### Technical Field

The present disclosure belongs to the technical field of power battery, and particularly relates to a battery pack.

### Description of Related Art

In the event of thermal runaway occurring within the cells of a battery pack, the high-temperature smoke emitted are prone to erratic dispersion, potentially leading to thermal propagation. This is particularly pertinent in the case of pouch batteries, where the exhaust pathway exhibits a degree of randomness. When cells undergo thermal runaway, should the high-temperature smoke be expelled from the tab sides of the cells, there exists a significant probability of short-circuiting and the initiation of thermal propagation at the tab. This presents a substantial safety hazard and potential liability.

### SUMMARY

Given the aforementioned drawbacks of the existing technology, the purpose of the present disclosure lies in providing a battery pack to solve the problem in the existing technology where cells in the battery pack are prone to short-circuiting and thermal propagation when thermal runaway occurs, in order to elevate the safety performance of the battery pack.

To achieve the above purpose and other related purposes, the present disclosure provides a battery pack, including: a lower housing, the lower housing having an upper opening and an exhaust portion; a cell stack body, the cell stack body including multiple stacked pouch cells, the cell stack body disposed in the lower housing, and a bottom side of the cell stack body connected and fixed to a baseplate of the lower housing; a foaming adhesive, the foaming adhesive filled and connected between a tab side of the cell stack body and the lower housing; a cover, the cover located at a top side of the cell stack body, and covering the upper opening of the lower housing; and a partition structure, the partition structure clamped between the cover and the cell stack body, and cooperating with the cover and the cell stack body to define an exhaust channel extending along a stacking direction of the pouch cells, the exhaust channel corresponding to and communicating with the exhaust portion.

Optionally, the quantity of the partition structures is multiple, the multiple partition structures are distributed at intervals along a length direction of the cell stack body, and cooperate with the cover and the cell stack body to define multiple exhaust channels distributed along the length direction of the cell stack body.

Optionally, a spacing between two of the adjacent partition structures is D, a length of the cell stack body is W, and 1/5W≤D≤1/3W.

Optionally, the partition structure is adhered and fixed to the cover and/or the cell stack body.

Optionally, the partition structure includes a structural adhesive.

Optionally, the lower housing includes an edge beam. The edge beam is internally equipped with an exhaust chamber. The exhaust portion is disposed on the edge beam to connect the exhaust channel and the exhaust chamber. An explosion-proof valve suitable for the exhaust chamber to exhaust smoke is mounted on the edge beam.

Optionally, the top end of the edge beam has an inclined structure facing the exhaust channel, and the exhaust portion is disposed on the inclined structure.

Optionally, the exhaust portion includes a vent.

Optionally, the exhaust channel is disposed directly opposite to the vent, and the width of the exhaust channel is the same as the width of the vent.

Optionally, the bottom side of the cell stack body is directly adhered and fixed to the baseplate of the lower housing through a thermally conductive structural adhesive.

Optionally, the quantity of the cell stack bodies is multiple, and the multiple cell stack bodies may be arranged along the length direction of the cell stack bodies. The lower housing further includes an end beam and a middle beam. The adjacent cell stack bodies may be separated by the middle beam. The tab side of the cell stack body faces the end beam or the middle beam, and is connected to the corresponding end beam or middle beam through the filled foaming adhesive.

As described above, the battery pack of the present disclosure at least has following advantageous effects. The bottom side of the cell stack body is connected and fixed to the baseplate of the lower housing. Foaming adhesive is filled between the tab side of the cell stack body and the lower housing. The cell stack body is mounted stably and reliably, and the tab of the pouch cell is not prone to short-circuiting or thermal propagation. Based on this, through the cooperation of the partition structure with the cover and the top side of the cell stack body to define the exhaust channel, the exhaust channel avoids the tab side of the cell stack body. When thermal runaway occurs in the pouch cell, high-temperature smoke may be exhausted through the exhaust channel, which elevates the safety performance of the battery pack.

### BRIEF DESCRIPTION OF THE DRAWINGS

FIG. 1 is a structural schematic view of an embodiment of a battery pack of the present disclosure.
FIG. 2 is a structural schematic view of the battery pack in FIG. 1 after removing the cover.
FIG. 3 is a top view of the battery pack in FIG. 2
FIG. 4 is a front view of the battery pack in FIG. 1.
FIG. 5 is a sectional view of FIG. 4 taken along line A-A.

### DESCRIPTION OF THE EMBODIMENTS

The implementation of the present disclosure is explained below in conjunction with specific embodiments. Those skilled in the art can easily understand other advantages and effects of the present disclosure from the content disclosed in this specification.

It should be noted that the structures, proportions, sizes, etc. shown in the drawings attached to this specification are only used to complement the content disclosed in the specification, to facilitate understanding and reading by those skilled in the art, and are not intended to limit the conditions under which the present disclosure may be implemented. Therefore, they have no substantial technical significance. Any modification of structure, change in proportion, or adjustment in size, as long as it does not affect the effects that can be produced by the present disclosure and the purposes that can be achieved, should still fall within the scope that can be covered by the technical content disclosed in the present disclosure. At the same time, terms such as "upper", "lower", "left", "right", "middle", and "one" quoted in this specification are also only for the clarity of narration, and not to limit the scope in which the present disclosure can be implemented. Changes or adjustments in their relative relationships, without substantially changing the technical content, should also be considered as falling within the scope in which the present disclosure can be implemented.

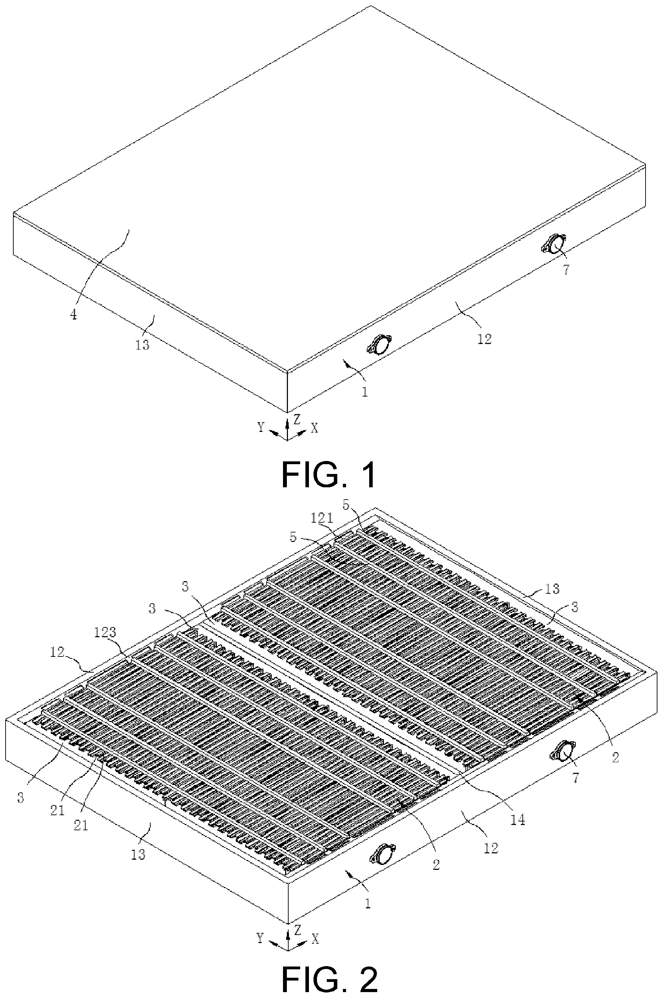

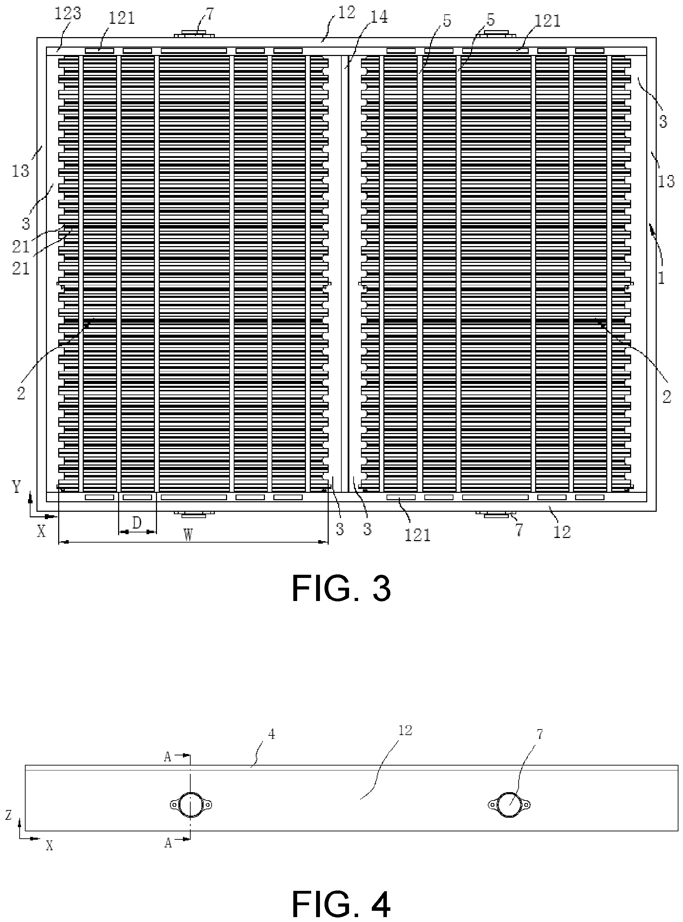

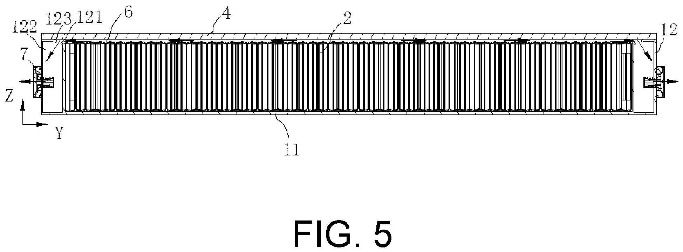

Referring to FIG. 1 to FIG. 5, the present disclosure provides a battery pack, which includes a lower housing 1, a cell stack body 2, a foaming adhesive 3, a cover 4, and a partition structure 5. The lower housing 1 has an upper opening and an exhaust portion 121. The cell stack body 2 includes multiple stacked pouch cells 21. The cell stack body 2 is disposed in the lower housing 1, and the bottom side of the cell stack body 2 is connected and fixed to the baseplate 11 of the lower housing 1. The foaming adhesive 3 is filled and connected between the tab side of the cell stack body 2 and the lower housing 1. The cover 4 is located on the top side of the cell stack body 2 and covers the upper opening of the lower housing 1. The cell stack body 2 may be loaded into the lower housing 1 through the upper opening of the lower housing 1. The cover 4 covers the upper opening so that the cell stack body 2 may be packaged in the accommodating space defined by the cooperation of the cover 4 and the lower housing 1. The partition structure 5 is clamped between the cover 4 and the cell stack body 2. The upper surface of the partition structure 5 is in contact with the lower surface of the cover 4. The lower surface of the partition structure 5 is in contact with the upper surface of the cell stack body 2. The partition structure 5 cooperates with the cover 4 and the cell stack body 2 to define an exhaust channel 6 extending along the stacking direction of the pouch cell 21. The exhaust channel 6 corresponds to and may communicate with the exhaust portion 121, so that when the pouch cell 21 experiences thermal runaway, the high-temperature smoke may flow through the exhaust channel 6 and is discharged through the exhaust portion 121.

Optionally, the bottom side of the cell stack body 2 is directly adhered and fixed to the baseplate 11 of the lower housing 1 through a thermally conductive structural adhesive, providing a stable and reliable connection with simple and convenient operation.

Optionally, the partition structure 5 is adhered and fixed to the cover 4 and/or the cell stack body 2.

Optionally, the partition structure 5 includes a structural adhesive, which has insulating, flame-retardant, high-temperature resistant and other characteristics with good safety performance and good contact sealing properties. The partition structure 5 may also avoid excessive compression on the cell stack body 2.

Optionally, the exhaust portion 121 includes a vent, which helps to timely discharge of smoke, has a simple structure, is easy to process, and has low production costs. Furthermore, the exhaust channel 6 is disposed directly opposite to the vent, and the width of the exhaust channel 6 is the same as the width of the vent, which is beneficial for improving exhaust efficiency.

Optionally, in the length direction of the pouch cell 21, both ends of the pouch cell 21 have tabs. In the present disclosure, the length direction of the pouch cell 21, the length direction of the cell stack body 2, the width direction of the exhaust channel 6, and the width direction of the vent are the same, which are the X direction in the accompanying drawings. The thickness direction of the pouch cell 21, the stacking direction of multiple pouch cells 21 in the same cell stack body 2, and the width direction of the cell stack body 2 are the same, which are the Y direction in the accompanying drawings. The height direction of the pouch cell 21, the height direction of the cell stack body 2, and the height direction of the lower housing 1 are the same, which are the Z direction in the accompanying drawings.

In the battery pack of the above-mentioned embodiment, the cell stack body 2 is connected and fixed to the lower housing 1, which is conducive to improving the configuration stability of the cell stack body 2. Particularly, when both the bottom side and the tab side of the cell stack body 2 are simultaneously connected and fixed to the lower housing 1, the connection is more secure and stable, making the cell stack body 2 less prone to shaking and more resistant to impact. The tab side of the cell stack body 2 is connected to the lower housing 1 through the filled foaming adhesive 3, making it possible to insulate and separate the tabs of adjacent pouch cells 21 and form a seal, improving the structural stability and impact resistance of the tabs of the pouch cells 21. It is possible to prevent high-temperature smoke from spreading chaotically on the tab side of the cell stack body 2, reducing the risk of short-circuiting and thermal propagation on the tab side of the cell stack body 2. The partition structure 5, the cell stack body 2, and the cover 4 cooperatively define the exhaust channel 6 located on the top side of the cell stack body 2, which not only facilitates exhaust but also avoids the tab side of the cell stack body 2, contributing to the improvement of the safety performance of the battery pack.

Referring to FIG. 2, FIG. 3 and FIG. 5, in some optional embodiments, the lower housing 1 includes an edge beam 12, with the non-tab side of the cell stack body 2 facing the edge beam 12. The edge beam 12 is internally equipped with an exhaust chamber 122. The exhaust portion 121 is disposed on the edge beam 12 to communicate with the exhaust channel 6 and the exhaust chamber 122. An explosion-proof valve 7 suitable for the exhaust chamber 122 to exhaust smoke is mounted on the edge beam 12.

Optionally, the top end of the edge beam 12 has an inclined structure 123 facing the exhaust channel 6, with the exhaust portion 121 disposed on the inclined structure 123. The inclined structure 123 has the function of guiding flow and buffering, which is conducive to the smoke in the exhaust channel 6 entering the exhaust portion 121.

Optionally, the lower housing 1 further includes an end beam 13, with the quantity of both the end beams 13 and the edge beams 12 being two. The end beam 13 and the edge beam 12 may be alternately distributed and connected end to end to form a square frame. The bottom of the end beam 13 and the bottom of the edge beam 12 are connected to the baseplate 11 of the lower housing 1. The structure of the lower housing 1 is simple and stable, capable of providing stable configuration support for the cell stack body 2.

Optionally, multiple exhaust portions 121 are disposed on the edge beam 12, with the multiple exhaust portions 121 distributed along the length direction of the cell stack body 2. Each exhaust channel 6 corresponds to and communicates with at least one exhaust portion 121. Furthermore, each exhaust channel 6 corresponds to and communicates with two exhaust portions 121. Specifically, one end of the exhaust channel 6 faces one of the edge beams 12 and corresponds to and communicates with one of the exhaust portions 121 on that edge beam 12, while the other end of the exhaust channel 6 faces the other edge beam 12 and corresponds to and communicates with one of the exhaust portions 121 on that edge beam 12. This structural design is conducive to the timely discharge of high-temperature smoke in the exhaust channel 6 through the exhaust portion 121.

Optionally, the quantity of cell stack bodies 2 is multiple, with multiple cell stack bodies 2 arranged along the length direction of the cell stack bodies 2. The lower housing 1 further includes a middle beam 14, with the adjacent cell stack bodies 2 separated by the middle beam 14. The two ends of the middle beam 14 may be connected to the two edge beams 12 respectively. The tab side of the cell stack body 2 faces the end beam 13 and the middle beam 14, and is connected to the corresponding end beam 13 and the middle beam 14 through the filled foaming adhesive 3. Furthermore, the quantity of cell stack bodies 2 is two, with one tab side of the cell stack body 2 facing the end beam 13, and the other tab side facing the middle beam 14. This arrangement is compact and may also avoid the flow pathway of smoke, which is conducive to improving safety performance.

In the battery pack of the above-mentioned embodiments, when thermal runaway occurs in the pouch cell 21, high-temperature substances and smoke may flow through the exhaust channel 6, the exhaust portion 121, and the exhaust chamber 122 in sequence, and then be discharged through the explosion-proof valve 7. The flow pathway of high-temperature substances and smoke avoids the tab side of the cell stack body 2, which lowers the risk of short-circuiting and thermal propagation at the tabs of the pouch cells 21 in the cell stack body 2, thereby elevating the safety performance of the battery pack.

Referring to FIG. 1 to FIG. 5, in some optional embodiments, the quantity of partition structures 5 is multiple, with the multiple partition structures 5 distributed at intervals along the length direction of the cell stack body 2, and cooperating with the cover 4 and the cell stack body 2 to define multiple exhaust channels 6 distributed along the length direction of the cell stack body 2.

Optionally, a spacing between two of the adjacent partition structures 5 is D, that is to say, the width of the exhaust channel 6 is D, a length of the cell stack body 2 is W, and 1/5W≤D≤1/3W.

In the battery pack of the above-mentioned embodiments, the multiple exhaust channels 6 are conducive to elevating the efficiency of discharging high-temperature smoke, lowering the risk of thermal propagation. The width of the exhaust channel 6 within an appropriate range is beneficial for improving the exhaust efficiency of the exhaust channel 6, and is advantageous for reducing the impact of high-temperature smoke on the tab side of the cell stack body2.

In the battery pack of the present disclosure, the foaming adhesive 3 is filled between the tab side of the cell stack body 2 and the lower housing 1. The top side of the cell stack body 2, the partition structure 5, and the cover 4 cooperate with each other to define the exhaust channel 6 that avoids the tab side of the cell stack body 2. This allows high-temperature smoke to be discharged from the non-tab side of the cell stack body 2, reducing the impact on the tab side of the cell stack body 2, thereby lowering the risk of short-circuiting and thermal propagation at the tabs of the pouch cells 21, and consequently elevating the safety performance of the battery pack.

In the description of this specification, references to terms such as "this embodiment", "example", "specific example", and so on indicate that the specific features, structures, materials, or characteristics described in connection with that embodiment or example are included in at least one embodiment or example of the present disclosure. In this specification, the illustrative expressions of the above terms do not necessarily refer to the same embodiment or example. Moreover, the described specific features, structures, materials, or characteristics may be combined in any suitable manner in one or more embodiments or examples.

The above-mentioned embodiments only illustratively explain the principle and its effects of the present disclosure, and are not intended to limit the present disclosure. Any person skilled in this technology may modify or change the above embodiments without departing from the spirit and scope of the present disclosure. Therefore, all equivalent modifications or changes completed by those with ordinary knowledge in the relevant technical field without departing from the spirit and technical concept disclosed by the present disclosure should still be covered by the claims of the present disclosure.

## Claims

1. A battery pack, comprising:
a lower housing (1), the lower housing having an upper opening and an exhaust portion (121);
a cell stack body (2), the cell stack body comprising a plurality of stacked pouch cells (21), the cell stack body disposed in the lower housing (1), and a bottom side of the cell stack body (2) connected and fixed to a baseplate (11) of the lower housing (1);
a foaming adhesive (3), the foaming adhesive filled and connected between a tab side of the cell stack body (2) and the lower housing (1);
a cover (4), the cover located at a top side of the cell stack body (2), and covering the upper opening of the lower housing (1); and
a partition structure (5), the partition structure clamped between the cover (4) and the cell stack body (2), and cooperating with the cover (4) and the cell stack body (2) to define an exhaust channel (6) extending along a stacking direction of the pouch cell (21), the exhaust channel (6) corresponding to and communicating with the exhaust portion (121).

2. The battery pack according to claim 1, wherein a quantity of the partition structures (5) is multiple, a plurality of the partition structures (5) are distributed at intervals along a length direction of the cell stack body (2), and cooperate with the cover (4) and the cell stack body (2) to define a plurality of the exhaust channels (6) distributed along the length direction of the cell stack body (2).

3. The battery pack according to claim 2, wherein a spacing between two of the adjacent partition structures (5) is D, a length of the cell stack body (2) is W, and 1/5W≤D≤1/3W.

4. The battery pack according to claim 1, wherein the partition structure (5) is adhered and fixed to the cover (4) and/or the cell stack body (2).

5. The battery pack according to claim 1, wherein the partition structure (5) comprises

6. The battery pack according to claim 1, wherein the lower housing comprises an edge beam (12), the edge beam (12) is internally equipped with an exhaust chamber (122), the exhaust portion (121) is disposed on the edge beam (12) to connect the exhaust channel (6) and the exhaust chamber (122), an explosion-proof valve (7) suitable for the exhaust chamber (122) to exhaust smoke is mounted on the edge beam (12).

7. The battery pack according to claim 6, wherein a top end of the edge beam (12) has an inclined structure (123) facing the exhaust channel (6), and the exhaust portion (121) is disposed on the inclined structure (123).

8. The battery pack according to claim 1, 6 or 7, wherein the exhaust portion (121) comprises a vent.

9. The battery pack according to claim 8, wherein the exhaust channel (6) is disposed directly opposite to the vent, and a width of the exhaust channel (6) is the same as a width of the vent.

10. The battery pack according to claim 1, wherein the bottom side of the cell stack body (2) is directly adhered and fixed to the baseplate (11) of the lower housing (1) through a thermally conductive structural adhesive.

11. The battery pack according to claim 1 or claim 6, wherein a quantity of the cell stack bodies (2) is multiple, and a plurality of the cell stack bodies (2) are arranged along a length direction of the cell stack bodies (2); the lower housing (1) further comprising an end beam (13) and a middle beam (14), the adjacent cell stack bodies (2) are separated by the middle beam (14), the tab side of the cell stack body (2) faces the end beam and the middle beam (14), and is connected to the corresponding end beam (13) and the middle beam (14) through the filled foaming adhesive.
